(19) Europäisches Patentamt
European Patent Office
Office européen des brevets

(11) **EP 1 488 274 B1**

(12) **EUROPÄISCHE PATENTSCHRIFT**

(45) Veröffentlichungstag und Bekanntmachung des Hinweises auf die Patenterteilung:
**20.04.2011 Patentblatt 2011/16**

(21) Anmeldenummer: **03720171.2**

(22) Anmeldetag: **13.03.2003**

(51) Int Cl.:
***G02C 7/02*** *(2006.01)*

(86) Internationale Anmeldenummer:
**PCT/DE2003/000825**

(87) Internationale Veröffentlichungsnummer:
**WO 2003/079095 (25.09.2003 Gazette 2003/39)**

(54) **PROGRESSIVES BRILLENGLAS MIT ZWEI ASPHÄRISCHEN, PROGRESSIVEN FLÄCHEN**

PROGRESSIVE SPECTACLE LENS WITH TWO NON-SPHERICAL PROGRESSIVE SURFACES

VERRE DE LUNETTES PROGRESSIF PRESENTANT DEUX SURFACES ASPHERIQUES, NOTAMMENT DEUX SURFACES PROGRESSIVES

(84) Benannte Vertragsstaaten:
**AT BE BG CH CY CZ DE DK EE ES FI FR GB GR HU IE IT LI LU MC NL PT RO SE SI SK TR**

(30) Priorität: **13.03.2002 DE 10211033**

(43) Veröffentlichungstag der Anmeldung:
**22.12.2004 Patentblatt 2004/52**

(73) Patentinhaber: **Rodenstock GmbH**
**80469 München (DE)**

(72) Erfinder:
• **HAIMERL, Walter**
**80337 München (DE)**
• **PFEIFFER, Herbert**
**81247 München (DE)**
• **ESSER, Gregor**
**81735 München (DE)**
• **ALTHEIMER, Helmut**
**87650 Lauchdorf (DE)**

(74) Vertreter: **Rocke, Carsten**
**Müller-Boré & Partner**
**Grafinger Strasse 2**
**81671 München (DE)**

(56) Entgegenhaltungen:
| | |
|---|---|
| WO-A-01/57584 | DE-A- 3 331 757 |
| DE-A- 3 331 763 | DE-A- 4 210 008 |
| DE-A- 4 337 369 | DE-A- 10 020 576 |
| US-A- 5 771 089 | US-B1- 6 199 984 |

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

**Beschreibung**

**Technisches Gebiet**

Die Erfindung bezieht sich auf ein progressives Brillenglas mit zwei asphärischen und insbesondere progressiven Flächen gemäß dem Oberbegriff des Patentanspruchs 1.

Unter progressiven Brillengläsern (auch als Gleitsichtgläser, Multifokalgläser bzw. -linsen etc. bezeichnet) versteht man üblicherweise Brillengläser, die in dem Bereich, durch den der Brillenträger einen in größerer Entfernung befindlichen Gegenstand betrachtet - i.f. als Fernteil bezeichnet -, eine andere (geringere) Brechkraft haben als in dem Bereich (Nahteil), durch den der Brillenträger einen nahen Gegenstand betrachtet. Zwischen dem Fernteil und dem Nahteil ist die sog. Progressionszone angeordnet, in der die Wirkung des Brillenglases von der Wirkung des Fernteils kontinuierlich auf die des Nahteils ansteigt. Den Wert des Wirkungsanstiegs (in dpt) zwischen dem sog. Fernbezugspunkt und dem sog. Nahbezugspunkt bezeichnet man auch als Addition (Add). Typische Werte der Addition liegen zwischen (ca.) 0,75 dpt und (ca.) 3,5 dpt.

In der Regel ist der Fernteil im oberen Teil des Brillenglases angeordnet und für das Blicken "ins Unendliche" ausgelegt, während der Nahteil im unteren Bereich angeordnet und insbesondere zum Lesen (Entfernungen 0,33 bis 0,4 m) ausgelegt ist. Für Spezialanwendungen - genannt werden sollen hier exemplarisch Pilotenbrillen oder Brillen für Bildschirmarbeitsplätze - können der Fern- und/oder der Nahteil auch anders angeordnet sein und/oder für andere Entfernungen ausgelegt sein. Ferner ist es möglich, dass mehrere Nahteile und/oder Fernteile und entsprechend mehrere Progressionszonen vorhanden sind.

Bei progressiven Brillengläsern mit konstantem Brechungsindex ist es für die Zunahme der Brechkraft zwischen dem Fernteil und dem Nahteil erforderlich, dass sich die Krümmung einer oder beider Flächen vom Fernteil zum Nahteil kontinuierlich ändert. Dies bedeutet, dass die Fläche(n) zumindest zweimal stetig differenzierbar sein muss (müssen):

Die Flächen von Brillengläsern werden üblicherweise durch die sogenannten Hauptkrümmungsradien R1 und R2 in jedem Punkt der Fläche charakterisiert. (Manchmal werden anstelle der Hauptkrümmungsradien auch die sogenannten Hauptkrümmungen K1 = 1/R1 und K2 = 1/R2 angegeben.) Die Hauptkrümmungsradien bestimmen zusammen mit dem Brechungsindex n des Brillenglas-Materials in jedem Punkt der Fläche die für die augenoptische Charakterisierung einer Fläche häufig verwendeten Größen:

$$\text{Flächenbrechwert} \quad = 0{,}5 * (n-1) * (1/R1 + 1/R2)$$

$$\text{Flächenastigmatismus} = \quad (n-1) * (1/R1 - 1/R2)$$

Der Flächenbrechwert ist die Größe, über die die Zunahme der Wirkung vom Fernteil zum Nahteil erreicht wird. Der Flächenastigmatismus (anschaulich Zylinderwirkung) ist eine "störende Eigenschaft", da ein Astigmatismus - sofern das Auge nicht selbst einen zu korrigierenden Astigmatismus aufweist -, der einen Wert von ca. 0,5 dpt übersteigt, zu einem als unscharf wahrgenommenen Bild auf der Netzhaut führt.

**Stand der Technik**

Die zur Erzielung des Flächenbrechwert-Zuwachses erforderliche Änderung der Krümmung der Fläche ohne das Sehen "störenden" Flächenastigmatismus ist zwar relativ einfach längs einer (ebenen oder gewundenen) Linie zu erreichen, seitlich dieser Linie ergeben sich jedoch starke "Verschneidungen" der Fläche, die zu einem großen Flächenastigmatismus führen, der das Glas in den Bereichen seitlich der genannten Linie mehr oder weniger schlecht macht.

Aus flächentheoretischen Gründen ist es also nicht möglich, bei einer Fläche, deren Flächenbrechkraft vom Fernteil zum Nahteil zunimmt, die Bereiche seitlich einer (astigmatismusfreien oder mit einem vorgegebenen Astigmatmus behafteten) Linie frei von physiologisch störendem Flächenastigmatismus "zu halten". Hierzu wird auch auf den sog. Satz von Minkwitz verwiesen.

Da sich im Fernteil die optische Wirkung und damit die Hauptkrümmungsradien (praktisch) nicht ändern sollen, ist es relativ einfach, den Fernteil einer progressiven Fläche so zu gestalten, dass der Fernteil in einem großen Bereich einen sehr kleinen Flächenastigmatismus (< 0,5 dpt) oder sogar den Flächenastigmatismus-Wert "0" aufweist, also sphärisch gestaltet ist. Andererseits ist die "Qualität" der Gestaltung der seitlichen Bereiche des Übergangsbereichs von entscheidender Bedeutung für die Verträglichkeit des Brillenglases für den jeweiligen Brillenträger.

Die grundsätzliche Aufgabe bei der Konstruktion jedes progressiven Brillenglases besteht damit darin, - ohne unzumutbare Verschlechterung des Fernteils bzw. dessen Größe - die Seitenbereiche in der Übergangszone sowie gegebenenfalls die Seitenbereiche des Nahteils so zu gestalten, dass das Brillenglas möglichst gut verträglich für den Brillenträger und insbesondere für einen Jung-Presbyopen ist, der erstmals ein progressives Brillenglas benutzt.

Zur Lösung dieser grundsätzlichen Aufgabe ist in der Vergangenheit bei der Konstruktion einer zur Brechkraftänderung beitragenden Fläche eines progressiven Brillenglases von einer in einer Ebene liegenden oder gewunden verlaufenden Linie - auch als Hauptmeridian oder als Hauptlinie bezeichnet - als "Konstruktionsrückgrad der Fläche" ausgegangen worden. Diese Linie bzw. dieses Konstruktionsrückgrad verläuft (üblicherweise) in etwa zentral auf der Fläche von oben nach unten und folgt mit ihrem Verlauf in etwa dem Durchstoßpunkt der Sehstrahlen durch die (jeweilige) Brillenglasfläche bei einer Blickbewegung und insbesondere bei einer Blicksenkung. Die Hauptkrümmungen eines jeden Punktes dieser Linie sind derart gewählt, dass die gewünschte Zunahme des Flächenbrechwertes vom Fernteil zum Nahteil erreicht wird. Ausgehend von dieser Linie sind dann die Seitenbereiche der Fläche (mehr oder weniger) geeignet berechnet worden.

Für die Gestaltung der Seitenbereiche sind eine Vielzahl von Lösungen bekannt geworden. In der Anfangszeit der Berechnung progressiver Brillengläser ist eine rein flächentheoretische Optimierung ausschließlich der progressiven Fläche durchgeführt worden, bei der eine möglichst weitgehende Reduzierung des störenden Flächenastigmatismus bzw. ein "Abdrängen" des Flächenastigmatismus in die seitlichen unteren Bereiche des Brillenglases im Vordergrund gestanden hat.

Seit einigen Jahren optimieren die meisten großen Hersteller von progressiven Brillengläsern die progressive Fläche nicht unter rein flächentheoretischen Gesichtspunkten, sondern für die so genannte Gebrauchsstellung, d.h. insbesondere unter Berücksichtigung des Astigmatismus schiefer Bündel, so dass nicht der Flächenastigmatismus, sondern der Gesamtastigmatismus als (eine) relevante, zu optimierende Größe betrachtet wird:

Zur Berechnung einer progressiven Fläche in der Gebrauchsstellung wird eine Gebrauchssituation festgelegt. Diese bezieht sich entweder auf einen konkreten Nutzer, für den die einzelnen Parameter - wie Pupillenabstand, Vorneigung, Hornhaut-Scheitelabstand usw. - in der jeweiligen Gebrauchssituation eigens ermittelt werden und die progressive Fläche gesondert berechnet und gefertigt wird, oder auf Durchschnittswerte, wie sie beispielsweise in der DIN 58 208 Teil 2 beschrieben sind. Ergänzend insbesondere zu den zu berücksichtigenden Parametern wird auf die WO 01/57584 A2 verwiesen.

Gleichgültig ob bei einem progressiven Brillenglases mit nur einer progressiven Fläche diese Fläche (nur) unter flächentheoretischen Gesichtspunkten oder für eine konkrete Gebrauchsstellung optimiert worden ist, ergeben sich dadurch, dass nur eine Fläche zum Bechkraft-Anstieg beiträgt, Einschränkungen hinsichtlich der Eigenschaften der optimierten Fläche und damit des gesamten Brillenglases.

Deshalb sind bereits seit langem - zumindest in der Patentliteratur - Brillengläser mit zwei progressiven Flächen vorgeschlagen worden. Nur exemplarisch wird hierzu auf die DE 33 31 757 A1 oder die DE 33 31 763 A1 (Anmelder: Optische Werke G. Rodenstock) verwiesen, auf die im übrigen wie auch auf alle hier genannten Veröffentlichungen zur Erläuterung und zur Ergänzung der vorliegenden Anmeldung ausdrücklich Bezug genommen wird.

Die Verwendung von zwei progressiven, d. h. zum Anstieg der optischen Wirkung vom Fernteil zum Nahteil beitragenden Flächen hat in jedem Falle den Vorteil, dass jede der Flächen nur einen Teil der Addition aufbringen muss. Da die Bildfehler einer Fläche, wie beispielsweise der Flächenastigmatismus oder die Verzeichnung bei den üblichen Flächendesigns stärker als linear mit der Zunahme der Addition Add ansteigen, ergeben sich bereits durch die Aufteilung der Addition auf zwei Flächen bessere optische Eigenschaften verglichen mit einem Progressivglas gleicher Fernteil-Wirkung und gleicher Addition, das nur eine progressive Fläche aufweist, und dessen andere Fläche eine sphärische oder torische Fläche ist.

Diese Aussage gilt auch dann, wenn die andere Fläche eine asphärische oder atorische Fläche ist, die individuell zur Anpassung einer progressiven Fläche, die für eine durchschnittliche Gebrauchssituation optimiert worden ist, an eine bestimmte, von der Auslegungs-Gebrauchssituation abweichende Gebrauchssituation berechnet worden ist.

Zudem addieren sich die Flächenastigmatismus-Werte der augenseitigen Fläche und der Vorderfläche geometrisch bzw. nach der Kreuzzylinder-Methode, d. h. nicht betragsmäßig, sondern unter Berücksichtigung ihrer Achslage. Da außerdem bei der Vorderfläche und der augenseitigen Fläche, die nacheinander oder gleichzeitig unter Berücksichtigung der bereits optimierten bzw. der jeweils anderen Fläche optimiert werden, die Maximalwerte des Flächenastigmatismus in der Regel an Stellen liegen, die nicht von ein- und demselben Sehstrahl "durchstoßen" werden, und zudem die Achslagen des Flächenastigmatismus ebenfalls in der Regel unterschiedlich sind, erreichen die (geometrisch) addierten Flächenastigmatismus-Werte der progressiven Vorderfläche und der progressiven augenseitigen Fläche nicht die Flächenastigmatismus-Werte eines Brillenglases mit nur einer progressiven Fläche. Zudem ist es sogar möglich, die Flächen so zu gestalten, dass sich die Bildfehler, wie beispielsweise die unerwünschten Flächenastigmatismus-Werte der beiden Flächen zumindest teilweise kompensieren. Hierzu wird auf die bereits erwähnten DE-Offenlegungsschriften der Optischen Werke G. Rodenstock verwiesen.

Bei den aus dem Stand der Technik bekannten progressiven Brillengläsern mit zwei progressiven Flächen sind die beiden Flächen ausschließlich unter dem Gesichtspunkt der Verbesserung der optischen Eigenschaften verglichen mit progressiven Brillengläsern mit nur einer progressiven Fläche berechnet worden.

Eine Optimierung der beiden progressiven Flächen unter anderen Gesichtspunkten, wie insbesondere geometrischen Gesichtspunkten, wie zum Beispiel dem einem Gläserring einer Brillenfassung angepassten Verlauf des Randes der vorderfläche eines gerandeten Brillenglases, ist in der Vergangenheit nicht in Betracht gezogen worden. Auch der in der DE 33 31 757 A1 angesprochene Abbau der Verschneidung dient lediglich einem Abbau des Flächenastigmatismus und damit einer Verbesserung der optischen Eigenschaften und nicht einer Optimierung eines progressiven Brillenglases mit zwei progressiven Flächen unter Berücksichtigung von geometrischen und insbesondere kosmetischen Gesichtspunkten.

## Darstellung der Erfindung

Die Erfindung liegt die Aufgabe zugrunde, ein progressives Brillenglas gemäß dem Oberbegriff des Patentanspruchs 1 derart weiterzubilden, dass es nicht nur gute optische Eigenschaften aufweist, sondern auch bestimmte Vorgaben insbesondere bezüglich seiner äußeren Formgestaltung erfüllt. Die Vorgaben können dabei unter kosmetischen Gesichtspunkten, z.B. Durchbiegung des Brillenglases und/oder hinsichtlich des Verlaufs des Brillenglasrandes gemacht werden.

Erfindungsgemäße Lösungen dieser Aufgabe sind in den unabhängigen Ansprüchen gekennzeichnet. Weiterbildungen der Erfindung sind Gegenstand der abhängigen Ansprüche.

Somit ist erfindungsgemäß vorgesehen, dass im Falle unterschiedlicher AstigmatisMus-Beträge und/oder Achslagen für die Ferne und die Nähe, d.h. im Fern- bzw. Nahteil die eine Fläche (i) zumindest im wesentlichen die astigmatische Verordnung im Fernteil und die andere Fläche (j) zumindest im wesentlichen die astigmatische Verordnung im Nahteil aufbringt.

Beispielsweise kann einer bestimmten Achslage zunächst der Flächenastigmatismus im Fernteil der Vorderfläche den Astigmatismus erzeugen, der den Astigmatismus des Auges (zumindest teilweise) kompensiert. In der Progressionszone nimmt dann der zur Kompensation erforderliche Flächenastigmatismus der Vorderfläche kontinuierlich ab, während der Flächenastigmatismus auf der augenseitigen Fläche kontinuierlich zunimmt. Im Nahteil trägt dann (nahezu) ausschließlich der Flächenastigmatismus der augenseitigen Fläche zur Kompensation des Astigmatismus des Auge bei. Selbstverständlich ist auch die umgekehrte Gestaltung möglich.

Insbesondere sind die Pfeilhöhen

$$z_i = z_i(x,y)$$

wenigstens einer (i) progressiven Fläche (i=1,2) so gewählt, dass die Pfeilhöhen z dieser Fläche an dem durch

$Y_i = f_{i1}(x)$ für $y \geq 0$ bzw.
$Y_i = f_{i2}(x)$ für $y < 0$

gegebenen Rand des Brillenglases vorgegebene Werte annehmen, ohne dass diese Fläche (i) oder die andere Fläche (j) eine zur Bildung eines Tragrandes etc. dienende Krümmungsumkehr aufweisen.

Ein Tragrand wird beispielsweise bei Star-Brillen verwendet, um des Brillenglas bei nicht zu großer Mittendicke in eine vergleichsweise große Brillenfassung einschleifen zu können.

Insbesondere kann dabei nicht nur der Verlauf des Randes, sondern sogar die Gestaltung des peripheren Bereichs einer oder beider Flächen weitgehend frei - beispielsweise unter kosmetischen Gischtpunkten - vorgegeben werden.

Unter Pfeilhöhe wird gemäß der üblichen Definition in der Brillenoptik im Rahmen der vorliegenden Anmeldung der Abstand eines Punktes mit den Koordinaten (x,y) auf einer der beiden Flächen des Brillenglases von der Tangentialebene an den Scheitel der Vorderfläche in Richtung der Flächennormale (z-Achse) der Tangentialebene verstanden. Der Ursprung des x,y,z-Koordinatensystems liegt dabei im Flächenscheitel der Vorderfläche, der in der Regel - aber nicht unbedingt - mit dem Mittelpunkt des rohrunden Brillenglases zusammenfällt. Die x-Achse verläuft in der Gebrauchsstellung, d.h. bei einem vor dem Auge des Brillenträgers angeordneten Brillenglas, horizontal, die y-Achse vertikal.

Erfindungsgemäß ist erkannt worden, dass es bei einem progressiven Brillenglas mit zwei asphärischen und insbesondere progressiven Flächen möglich ist, den Verlauf des Randes (und sogar des peripheren, nur zum orientierenden Sehen dienenden Bereichs) wenigstens einer Fläche weitgehend frei vorzugeben, wobei der Randbereich in gleicher Weise wie bei einem herkömmlichen progressiven Brillenglas mit nur einer progressiven Fläche, die ohne Rücksicht auf den Verlauf des Randes optimiert worden ist, für das (direkte und indirekte) Sehen genutzt werden kann. Insbesondere ist der Randbereich damit nicht als sogenannter Tragrand ausgestaltet, wie er beispielsweise bei Brillengläsern hoher Wirkung für Star-operierte Brillenträger eingesetzt wird; derartige Brillengläser sind z. B. in der DE 32 25 270 C2 beschrieben, auf die insbesondere zu Erläuterung der Begriffe "Krümmungsumkehr" und "Tragrand" ausdrücklich Bezug genommen wird.

Vor allem aber hat - anders als bei Brillengläsern mit nur einer progressiven Fläche - die im wesentlichen durch geometrische Vorgaben bestimmte Vorgabe des Verlaufs des Randes praktisch keine Auswirkungen auf die optischen Eigenschaften des Brillenglases im zentralen, d.h. für das direkte unmittelbare Sehen entscheidendem Bereich. Bei Brillengläsern mit nur einer progressiven Fläche stellt man dagegen fest, dass Randbedingungen für die Peripherie die Optimierung des zentralen Bereichs spürbar beeinflussen.

So ist es bei dem erfindungsgemäßen Brillenglas insbesondere möglich, dass wie bei bekannten progressiven Brillengläsern mit nur einer progressiven Fläche der Gesamtastigmatismus an keiner Stelle des Brillenglases einen Wert von 1,5*Add und insbesondere 1,1*Add oder sogar 1,0*Add überschreitet. Unter Gesamtastigmatismus wird der Astigmatismus in Gebrauchsstellung verstanden, der im wesentlichen durch den Flächenastigmatismus der beiden Flächen sowie den Astigmatismus schiefer Bündel bestimmt ist. Bei Brillengläsern mit geringer optischer Wirkung ist der Gesamtastigmatismus im wesentlichen durch den Flächenastigmatismus der beiden Flächen bestimmt.

Diese Einhaltung von Bedingungen für den Gesamtastigmatismus muss insbesondere nicht zu Lasten anderer optische Eigenschaften, wie der Verzeichnung und/oder des Refraktionsfehlers gehen. Insbesondere ist es möglich, dass der Refraktionsfehler an keiner Stelle des Brillenglases einen Wert von 1*Add und insbesondere von 0,7*Add überschreitet. Weiterhin können auch bestimmte Vorgaben für die prismatischen Wirkungen an bestimmten Stellen des Brillenglases gemacht werden.

In der Praxis sind sogar noch wesentlich geringere Werte für den Gesamtastigmatismus und den Refraktionsfehler möglich !

Bei der erfindungsgemäßen Vorgabe des Verlaufs des Randes können die verschiedensten Gesichtspunkte der berücksichtigt werden:

Insbesondere kann der Rand der durch eine gewählte Brillenfassung vorgegebene Rand des gerandeten Brillenglases sein. Dies bedeutet, dass auch bei extrem gestalteten Brillenfassungen der (individuell berechnete) Randverlauf beispielsweise so ausgebildet sein kann, dass der Rand der Vorderfläche an keiner Stelle über den so genannten Gläserring der Brillenfassungen "vorspringt".

Selbstverständlich ist es aber nicht nur möglich, den Randverlauf unter Berücksichtigung des Verlaufs der Gläserringe der Brillenfassungen, in die die progressiven Brillengläsern eingesetzt werden sollen, vorzugeben.

Insbesondere dann, wenn die beiden progressiven Flächen nicht für eine individuelle Gebrauchssituation, sondern für eine durchschnittliche Gebrauchssituation, also nicht individuell berechnet werden, ist es von Vorteil, wenn der Randverlauf für das rohrunde Brillenglas vorgegeben wird.

Alternativ oder zusätzlich kann der Randverlauf bzw. die Gestaltung des peripheren Bereichs einer oder beider Flächen auch so vorgegeben werden, dass die kritische Dicke des Brillenglases - die Mittendicke bei Brillengläsern mit positiver Wirkung bzw. die Randdicke bei Brillengläsern mit negativer Wirkung - minimiert wird.

Weiter ist es möglich, die Verläufe der Ränder der beiden Flächen so zu wählen, dass die Variation der Randdicke längs des Umfangs des Brillenglases deutlich geringer als bei einem progressiven Brillenglas mit nur einer asphärisch-progressiven Fläche ist. Die Reduzierung der Randdicke kann dabei ausgewogen mit einer Verbesserung der optischen Eigenschaften verglichen mit einem Brillenglas mit nur einer progressiven Fläche erfolgen:

Insbesondere ist es bei einer ausgewogenen Gestaltung möglich, dass die Variation der Randdicke längs des Umfangsrandes um wenigstens 30% geringer als bei einem progressiven Brillenglas mit gleicher Fernteilwirkung und Addition und mit nur einer progressiven Fläche ist. Absolut ausgedrückt kann die Randdicke längs des Umfangs eines rohrunden Brillenglases weniger als 40% und insbesondere weniger als 25% variieren.

Das erfindungsgemäße Brillenglas kann dabei ansonsten ähnlich wie herkömmliche progressiven Brillengläser und insbesondere individuell für einen bestimmten Patienten bzw. eine bestimmte Gebrauchsstellung berechnete Brillengläser mit nur einer progressiven Fläche ausgebildet sein:

Beispielsweise ist es im Falle einer astigmatischen Verordnung möglich, dass wenigstens eine der beiden Flächen einen Flächenastigmatismus aufweist, dessen Betrag und Achslage den Astigmatismus des Auges - gegebenenfalls unter Berücksichtigung des Astigmatismus schiefer Bündel - zumindest annähernd korrigiert.

Dennoch hat das erfindungsgemäße Brillenglas eine Vielzahl von Gestaltungsmöglichkeiten, die in der veröffentlichten Patentliteratur nicht beschrieben bzw. bei den bekannten progressiven Brillengläsern mit zwei progressiven Flächen nicht realisiert sind:

Eine, beim Stand der Technik nicht erkannte Gestaltungsmöglichkeit bei Brillengläsern mit zwei progressiven Flächen ist die Aufteilung der Addition zwischen der Vorderfläche und der augenseitigen Fläche:

Damit ist zum einen gemeint, dass die Vorderfläche und die augenseitige Fläche nicht den gleichen Betrag zum Anstieg der Wirkung vom Fernteil (Fernbezugspunkt) zum Nahteil (Nahbezugspunkt) beitragen müssen. Zum anderen ist damit gemeint, dass der Anstieg der Wirkung auf der Vorderfläche und der augenseitige Fläche örtlich, d.h. längs und/oder senkrecht zur (jeweiligen) Hauptlinie unterschiedlich sein kann.

Beispielsweise kann der durch das jeweilige Rezept vorgegebene Wirkungsanstieg Add vom Fernteil zum Nahteil (Addition) derart zwischen der Vorderfläche (i=1) und der augenseitigen Fläche (i=2) aufgeteilt sein, dass die Pfeilhöhen $z_i$ der wenigstens einen Fläche (i) die vorgegebenen Werte aufweisen.

Daneben ist es aber auch möglich, dass der Wirkungsanstieg in der Progressionszone beginnend vom Fernbezugspunkt zunächst (im wesentlichen) durch die Krümmungsänderung der einen Fläche und im unteren Teil der Progressionszone (im wesentlichen) durch die Krümmungsänderung der anderen Fläche erzeugt wird. Anders ausgedrückt ist der Gradient des Wirkungsanstiegs auf der Vorderfläche und der augenseitigen Fläche in der Progressionszone längs der Hauptlinien örtlich unterschiedlich. Hiermit ergeben sich vollständig neue Gestaltungsmöglichkeiten der Peripherie der erfindungsgemäßen Brillengläser.

Ferner ist es auch möglich, dass nicht nur der Verlauf des Progressionsanstiegs längs der Hauptlinie, sondern auch die Länge der Progressionszone auf der Vorderfläche und der augenseitigen Fläche unterschiedlich ist.

Weiterhin ist es möglich, dass der Fernteil und der Nahteil auf der Vorderfläche und der augenseitigen Fläche eine unterschiedliche Erstreckung aufweisen:

Die Begrenzungen des Fernteils und des Nahteils sind üblicherweise durch eine ISO-Flächenastigmatismus-Linie mit einem bestimmten Absolutwert gegeben. Diese Linien können dann auf der Vorderfläche und auf der augenseitigen Fläche unterschiedlich verlaufen.

Im Falle einer Astigmatismus-freien Verordnung ist die den Fernteil bzw. den Nahteil begrenzende ISO-Astigmatismus-Linie üblicher Weise die 0,5 dpt-Linie des Flächenastigmatismus. Selbstverständlich sind aber auch andere Definitionen für die Begrenzung des Fernteil des bzw. des Nahteils möglich.

Wie bereits gesagt, ist das erfindungsgemäße Brillenglas in bestimmten Teilen in herkömmlicher Weise ausgebildet:

So ist es insbesondere möglich, dass die Wirkung vom Fernteil zum Nahteil in an sich bekannter Weise längs einer zur Nasenseite hin gewundenen Kurve (Hauptlinie) ansteigt.

Die Hauptlinien können auf der Vorderfläche und der augenseitigen Fläche unterschiedlich verlaufen. Dies ist zum einen auf Grund der prismatischen Ablenkungen des Sehstrahles im Brillenglas erforderlich. Der Unterschied im Verlauf der Hauptlinien kann aber auch größer oder kleiner sein als zur Kompensation der prismatischen Ablenkungen erforderlich und so eine weitere Gestaltungsmöglichkeit darstellen.

Damit ist bei dem erfindungsgemäßen Brillenglas häufig der Versatz der Hauptlinien zwischen dem Fernteil und dem Nahteil auf der Vorderfläche und der augenseitigen Fläche unterschiedlich. Zudem kann der Versatz eine Funktion der Addition und/oder der Wirkung sein.

Die Hauptlinie auf der Vorderfläche und der augenseitigen Fläche muss insbesondere nicht die Mitte zwischen zwei ISO-Astigmatismus-Linien sein:

So ist es möglich, dass auf den Hauptlinien der Flächenastigmatismus im Falle einer Astigmatismus-freien Verordnung ein Minimum und im Falle einer astigmatischen Verordnung die größte Annäherung an den Wert der astigmatischen Verordnung im zentralen Bereich des Brillenglases aufweist.

Alternativ ist es auch möglich, dass insbesondere im Falle einer astigmatischen Verordnung der Flächenastigmatismus sich senkrecht zur Hauptlinie in einem Streifen beidseits der Hauptlinie zumindest annähernd linear ändert.

Das erfindungsgemäße Brillenglas kann in an sich bekannter Weise unter Berücksichtigung der vorstehenden technischen Lehre berechnet werden, so dass auf die Beschreibung eines konkreten Ausführungsbeispiels verzichtet werden kann. Insbesondere ist es möglich, dass zur Berechnung eines erfindungsgemäßen Brillenglases in an sich bekannter Weise eine Zielfunktion vorgegeben wird. Dabei werden die Anfangsbedingungen für den Doppelstreifen beidseits der Hauptlinien der Vorderfläche und der augenseitigen Flächen derart geeignet gewählt, dass bei einer Flächengestaltung, die die vorgegebene Zielfunktion erfüllt, der vorgegebene Verlauf der Pfeilhöhen z des Randes der Fläche(n) erhalten wird.

Als Zielfunktion F, mit der nicht nur ein Wert des Flächenastigmatismus, sondern auch die Achslage des Flächenastigmatismus längs der Hauptlinie und der Wert der Flächenbrechkraft vorgegeben werden können, kann beispielsweise verwendet werden:

$$F = \int_{Y_{min}}^{Y_{max}} [(A - A_v)^2 + (D - D_v)^2 + (\varepsilon - \varepsilon_v)^2] \, dy$$

wobei $A_v(y)$, $D_v(y)$ und $\varepsilon v(y)$ die jeweils vorgegebenen Flächeneigenschaften entlang der Hauptlinie und

A(y)    der Flächenastigmatismus,
D(y)    der Flächenbrechwert, und
$\varepsilon(y)$    die Achslage des Flächenastigmatismus bezüglich der Horizontalebene sind.

Durch Minimierung dieser Zielfunktion können die Hauptlinie und der sie umgebende Bereich (Doppelstreifen) nach Vorgabe der Projektion $f_1(y)$ der Hauptlinie auf die x,y-Ebene unter physiologischen Gesichtspunkten erhalten werden. Dabei können auch erforderliche oder aus gestalterischen Gründen vorgegebene Prismen berücksichtigt werden. Ergänzend wird hierzu auf die DE 43 37 369 A1 verwiesen.

Insbesondere ist es dabei möglich, dass sich bei einer Flächengestaltung, die die vorgegebene Zielfunktion erfüllt, eine Variation der Randdicke ergibt, die deutlich geringer als bei einem progressiven Brillenglas mit nur einer progressiven Fläche ist. Die vorgegebene Zielfunktion entspricht dabei der eines progressiven Brillenglases mit nur einer progressiven Fläche, das ohne Berücksichtigung des Randverlaufs optimiert wird.

In jedem Falle erhält man ein Brillenglas mit zwei progressiven Flächen, bei dem der periphere Randbereich nicht nur unter optischen, sondern auch unter geometrischen und insbesondere kosmetischen Gesichtspunkten gestaltet ist, ohne dass die Verträglichkeit des Brillenglases leiden würde.

Zusätzlich oder alternativ können auch andere Vorgaben hinsichtlich des Flächenverlaufs eingehalten werden, die unter "nicht-optischen" Gesichtspunkten, beispielsweise kosmetischen Gesichtspunkten, wie Durchbiegung des Brillenglases in einer oder zwei zueinander senkrechten Richtungen, kritische Dicke etc. gemacht werden, ohne dass die Verträglichkeit des Brillenglases leiden würde.

**Patentansprüche**

1.  Progressives Brillenglas mit zwei progressiven, zum Wirkungsanstieg Add vom Fernteil zum Nahteil beitragenden Flächen, wobei wenigstens eine der beiden Flächen einen Flächenastigmatismus aufweist, dessen Betrag und Achslage einen Astigmatismus des Auges gemäß einer astigmatischen Verordnung zumindest annähernd korrigiert, **dadurch gekennzeichnet, dass** im Falle unterschiedlicher Astigmatismus-Beträge und/oder Achslagen für die Ferne und die Nähe die eine Fläche (i) zumindest im wesentlichen die astigmatische Verordnung im Fernteil und die andere Fläche (j) zumindest im wesentlichen die astigmatische Verordnung im Nahteil aufbringt.

2.  Progressives Brillenglas nach Anspruch 1, **dadurch gekennzeichnet, dass** wenigstens eine der progressiven Flächen keine zur Bildung eines Tragrandes etc. dienende Krümmungsumkehr aufweist und dass der Gesamtastigmatismus an keiner Stelle des Brillenglases einen Wert von 1,5*Add und insbesondere 1,1*Add überschreitet.

3.  Brillenglas nach Anspruch 2, **dadurch gekennzeichnet, dass** die vorgegebenen Werte der Pfeilhöhen z der jeweiligen Fläche(n) am Rand im wesentlichen durch geometrische Vorgaben bestimmt sind, und dass trotz der Einhaltung dieser Vorgaben der Refraktionsfehler an keiner Stelle des Brillenglases einen Wert von 1*Add und insbesondere von 0,7*Add überschreitet.

4.  Brillenglas nach einem der Ansprüche 2 bis 3, **dadurch gekennzeichnet, dass** der Rand der durch eine (individuell) gewählte Brillenfassung vorgegebene Rand eines gerandeten Brillenglases ist.

**5.** Brillenglas nach einem der Ansprüche 2 bis 4, **dadurch gekennzeichnet, dass** der Rand der Rand eines rohrunden Brillenglases ist.

**6.** Brillenglas nach einem der Ansprüche 1 bis 5, **dadurch gekennzeichnet, dass** der Flächenastigmatismus derart gewählt ist, dass der Flächenastigmatismus unter Berücksichtigung des Astigmatismus schiefer Bündel den Astigmatismus des Auges zumindest annähernd korrigiert.

**7.** Brillenglas nach einem der Ansprüche 1 bis 6, **dadurch gekennzeichnet, dass** die Begrenzungen des Fernteils und des Nahteils, die durch eine ISO-Flächenastigmatismus-Linie mit einem bestimmten Absolutwert gegeben sind, auf der Vorderfläche (i=1) und der augenseitigen Fläche (i=2) unterschiedlich verlaufen.

**8.** Brillenglas nach einem der Ansprüche 1 bis 7, **dadurch gekennzeichnet, dass** die Wirkung vom Fernteil zum Nahteil in an sich bekannter Weise längs einer zur Nasenseite hin gewundenen Kurve (Hauptlinie) ansteigt.

**9.** Brillenglas nach Anspruch 8, **dadurch gekennzeichnet, dass** der Versatz der Hauptlinien zwischen dem Fernteil und dem Nahteil auf der Vorderfläche und der augenseitigen Fläche unterschiedlich ist.

**10.** Brillenglas nach einem der Ansprüche 1 bis 9, **dadurch gekennzeichnet, dass** die Länge der Progressionszone und/oder der Verlauf des Progressionsanstieges längs der Hauptlinie auf der Vorderfläche und der augenseitigen Fläche unterschiedlich ist.

**11.** Verfahren zur Berechnung eines progressiven Brillenglases nach einem der Ansprüche 1 bis 10, wobei eine Zielfunktion vorgegeben wird, und die Anfangsbedingungen für einen Doppelstreifen beidseits der Hauptlinien der Vorderfläche und der augenseitigen Flächen derart geeignet gewählt werden, dass bei einer Flächengestaltung, die die vorgegebene Zielfunktion erfüllt, der vorgegebene Verlauf der Pfeilhöhen z des Randes der Fläche(n) erhalten wird, **dadurch gekennzeichnet, dass** die Zielfunktion derart vorgegeben wird, dass im Falle unterschiedlicher Astigmatismus-Beträge und/oder Achslagen für die Ferne und die Nähe die eine Fläche zumindest im wesentlichen die astigmatische Verordnung im Fernteil und die andere Fläche zumindest im wesentlichen die astigmatische Verordnung im Nahteil aufbringt.

**12.** Verfahren nach Anspruch 11, **dadurch gekennzeichnet, dass** die Optimierung derart erfolgt, dass die kritische Dicke des Brillenglases minimiert wird.

**Claims**

**1.** Progressive spectacle lens with two progressive surfaces contributing to the add power increase from the distance part to the near part, wherein at least one of the two surfaces has a surface astigmatism, the magnitude and axial position of which at least approximately corrects an astigmatism of the eye according to an astigmatism prescription, **characterised in that** in the case of different magnitudes and/or axial positions of astigmatism for the distance field and the near field one surface (i) applies at least substantially the astigmatism prescription in the distance part and the other surface (j) applies at least substantially the astigmatism prescription in the near part.

**2.** Progressive spectacle lens according to claim 1, **characterised in that** at least one of the progressive surfaces has no curvature reversal serving to form a support edge etc., and that the total astigmatism does not exceed a value of 1.5*add and in particular 1.1*add at any point of the spectacle lens.

**3.** Spectacle lens according to claim 2, **characterised in that** the predetermined values of the sagittae z of the respective surface(s) at the edge are substantially determined by geometric set values, and that in spite of adherence to these set values the refraction error does not exceed a value of 1 *add and in particular 0.7*add at any point of the spectacle lens.

**4.** Spectacle lens according to one of claims 2 to 3, **characterised in that** the edge is the edge of a rimmed spectacle lens predetermined by an (individually) selected spectacle frame.

**5.** Spectacle lens according to one of claims 2 to 4, **characterised in that** the edge is the edge of a raw round spectacle lens.

6. Spectacle lens according to one of claims 1 to 5, **characterised in that** the surface astigmatism is selected in such a way that the surface astigmatism at least approximately corrects the astigmatism of the eye with consideration of the astigmatism of oblique light bundles.

7. Spectacle lens according to one of claims 1 to 6, **characterised in that** the boundaries of the distance part and the near part, which are given by an ISO surface astigmatism line with a specific absolute value, run differently on the front surface (i=1) and the concave surface (i=2).

8. Spectacle lens according to one of claims 1 to 7, **characterised in that** the power increases from the distance part to the near part in a manner known per se along a curve (principal line) wound towards the side of the nose.

9. Spectacle lens according to claim 8, **characterised in that** the displacement of the principal lines between the distance part and the near part is different on the front surface and the concave surface.

10. Spectacle lens according to one of claims 1 to 9, **characterised in that** the length of the progression zone and/or the course of the progression increase along the principal line is different on the front surface and the concave surface.

11. Method for designing a progressive spectacle lens according to one of claims 1 to 10, wherein a target function is predetermined and the initial conditions for a double line on both sides of the principal lines of the front surface and the concave surface are appropriately selected in such a manner that when configuring the surfaces that fulfil the predetermined target function the predetermined course of the sagittae z of the edge of the surface(s) is obtained, **characterised in that** the target function is predetermined in such a manner that in the case of different magnitudes and/or axial positions of the astigmatism for the distance field and the near field one surface applies at least substantially the astigmatism prescription in the distance part and the other surface applies at least substantially the astigmatism prescription in the near part.

12. Method according to claim 11, **characterised in that** the optimisation occurs in such a manner that the critical thickness of the spectacle lens is minimised.

**Revendications**

1. Verre de lunettes progressif présentant deux surfaces progressives, contribuant à l'augmentation de l'effet Add de la partie de vision de loin à la partie de vision de près, au moins l'une des deux surfaces présentant un astigmatisme de surface, dont la valeur et la position axiale corrigent au moins approximativement un astigmatisme de l'oeil selon une ordonnance astigmatique,
**caractérisé en ce qu'**en cas de différentes valeurs d'astigmatisme et/ou de positions axiales pour la vision de loin et la vision de près, une surface (i) applique au moins sensiblement l'ordonnance astigmatique dans la partie de vision de loin et l'autre surface (j) applique au moins sensiblement l'ordonnance astigmatique dans la partie de vision de près.

2. Verre de lunettes progressif selon la revendication 1,
**caractérisé en ce qu'**au moins l'une des surfaces progressives ne présente aucun inversement de courbure servant à la formation d'un bord porteur, etc.,
et **en ce que** l'astigmatisme total ne dépasse une valeur de 1,5*Add et en particulier 1,1*Add à aucun endroit du verre de lunettes.

3. Verre de lunettes selon la revendication 2, **caractérisé en ce que** les valeurs prescrites des hauteurs d'arc z de la/des surface(s) respective(s) sur le bord sont sensiblement déterminées par des prescriptions géométriques et **en ce qu'**en dépit du respect de ces prescriptions, le défaut de réfraction ne dépasse une valeur de 1*Add et en particulier de 0,7*Add à aucun endroit du verre de lunette.

4. Verre de lunettes selon l'une quelconque des revendications 2 à 3, **caractérisé en ce que** le bord est le bord prescrit par une monture de lunettes choisie (individuellement) d'un verre de lunettes à bord.

5. Verre de lunettes selon l'une quelconque des revendications 2 à 4, **caractérisé en ce que** le bord est le bord d'un verre de lunettes rond et brut.

6. Verre de lunettes selon l'une quelconque des revendications 1 à 5,
**caractérisé en ce que** l'astigmatisme de surface est choisi de manière à corriger au moins approximativement l'astigmatisme de l'oeil en tenant compte de l'astigmatisme de faisceaux asymétriques.

7. Verre de lunettes selon l'une quelconque des revendications 1 à 6,
**caractérisé en ce que** les délimitations de la partie de loin et de la partie de près données par une ligne d'astigmatisme de surface ISO présentant une valeur absolue déterminée, s'étendent différemment sur la surface avant (i=1) et sur la surface côté oeil (i=2).

8. Verre de lunette selon l'une quelconque des revendications 1 à 7, **caractérisé en ce que** l'effet de la partie de loin à la partie de près augmente d'une manière connue en soi le long de la courbe sinueuse vers le côté du nez (ligne principale).

9. Verre de lunette selon la revendication 8, **caractérisé en ce que** le déport des lignes principales entre la partie de vision de loin et la partie de vision de près est différent sur la surface avant et sur la surface côté oeil.

10. Verre de lunette selon l'une quelconque des revendications 1 à 9,
**caractérisé en ce que** la longueur de la zone de progression et/ou le tracé de l'augmentation de progression le long de la ligne principale est différent sur la surface avant et sur la surface côté oeil.

11. Procédé de calcul d'un verre de lunettes progressif selon l'une quelconque des revendications 1 à 10, une fonction cible étant prescrite et les conditions initiales pour une double bande de part et d'autre des lignes principales de la surface avant et des surfaces côté oeil étant choisies de manière appropriée de telle façon que le tracé prescrit des hauteurs d'arc z du bord de la/des surface(s) est obtenu lors d'une formation de surface qui remplit la fonction cible prescrite, **caractérisé en ce que** la fonction cible est prescrite de telle manière qu'en cas de valeurs d'astigmatisme et/ou de positions axiales différentes pour la vision de loin et la vision de près, une surface applique au moins sensiblement l'ordonnance astigmatique dans la partie de vision de loin et l'autre surface au moins sensiblement dans la partie de vision de près.

12. Procédé selon la revendication 11, **caractérisé en ce que** l'optimisation est effectuée de telle manière que l'épaisseur critique du verre de lunettes soit minimisée.

**EP 1 488 274 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0157584 A2
- DE 3331757 A1
- DE 3331763 A1
- DE 3225270 C2
- DE 4337369 A1